# EUROPEAN PATENT APPLICATION

(11) **EP 2 141 467 A1**
(43) Date of publication of application: **06.01.2010**
(21) Application number: 08388024.5
(22) Date of filing: 04.07.2008
(51) Int. Cl.: G01G 19/393, G01G 13/06, G01G 19/32

(54) **Apparatus and method for weighing and batching products**

(71) Applicant: Cabinplant A/S, 5683 Haarby (DK)
(72) Inventor: Hansen, Henning Ingemann, 5220 Odense SO (DK)
(74) Representative: Nielsen, Henrik Sten

(57) **Abstract**

A method for weighing and batching discrete articles into batches having a total weight within a first or a second target weight interval. The discrete articles have a weight distribution establishing a mean value, and the first target weight interval defines a first target weight interval mean value being different from a multiple of the mean value and being less than n times the mean value. The second target weight interval defines a second target weight interval mean value being different from a multiple of the mean value and being larger than m times the mean value. The weighing and batching is performed by an apparatus comprising a feeder system comprising an inlet for receiving the discrete articles and an outlet for discharging the discrete articles, and a plurality of weighing pans, and comprises providing the discrete articles to the inlet of the feeder system, as the discrete articles are distributed into portions in the plurality of weighing pans, establishing a batch by a combination of portions in corresponding weighing pans resulting in a combined weight within the first target weight interval, and provided no combination of portions in corresponding weighing pans result in a combined weight within the first target weight interval, establishing a batch by selecting a combination of portions in corresponding weighing pans resulting in a combined weight within the second target weight interval.

## Description

The present invention relates to a method for weighing and batching products. Further, the present invention relates to an apparatus for weighing and batching products.

Other methods and apparatuses have been described in publications such as US 4,844,190, US 5,211,253 and EP 1 536 214. Reference is made to the above-mentioned publications, all of which are hereby incorporated in the present specification by reference in their entirety for all purposes.

When packaging discrete products, e.g. chicken wings, legs of chicken, i.e. drumsticks, filets of chicken or other animals, fruit, vegetables, spring rolls, or any other product, frozen or fresh, there is a need for a method of weighing and batching a number of such products to be put into a package for transportation and sale. There is a need for producing such packages with a number of products, which in combination define a weight within a target weight interval. The target weight interval may depend on the type of products being weighed and batched. Such methods may be performed by use of apparatuses, which comprise a number of weighing pans into each of which one or more discrete articles are put. The target weight may then be obtained by selecting or establishing a combination of the discrete articles comprised in one or more of the weighing pans.

As the statistical distribution of the weight of the products or discrete articles to be weighed and batched define a mean value, situations may arise where it is not possible to establish a combined batch having a weight within the target weight interval. The traditional solution has been to discard all discrete articles in the weighing pans, either to recycle them in the process or to dispose of them entirely.

As these solutions take longer time, and thereby may result in increased costs, there is a need for a method, which may provide a more efficient weighing and batching.

A first aspect of the present invention relates to a method for weighing and batching discrete articles into batches having a total weight within a first or a second target weight interval, the discrete articles having a weight distribution establishing a mean value, the first target weight interval defining a first target weight interval mean value being different from a multiple of the mean value and being less than n times the mean value, n being a first specific number of discrete articles, the second target weight interval defining a second target weight interval mean value being different from a multiple of the mean value and being larger than m times the mean value, m being a second specific number of discrete articles, m being larger than n,
the weighing and batching being performed by an apparatus that may comprise:
   a feeder system comprising an inlet for receiving the discrete articles and an outlet for discharging the discrete articles, and a plurality of weighing pans, each of the weighing pans having an inlet positioned so as to receive the discrete articles from the outlet of the feeder system, each of the weighing pans having an outlet for discharging the discrete articles,
   the method may comprise:
      performing the weighing and batching by providing the discrete articles to the inlet of the feeder system, the discrete articles being distributed into portions in the plurality of weighing pans,
      establishing a batch by a combination of portions in corresponding weighing pans resulting in a combined weight within the first target weight interval, and
      provided no combination of portions in corresponding weighing pans result in a combined weight within the first target weight interval, establishing a batch by selecting a combination of portions in corresponding weighing pans resulting in a combined weight within the second target weight interval.

In a presently preferred embodiment of the present invention, the discrete articles provided to the feeder system are foodstuff products, such as chicken filets, turkey filets, drumsticks from either chicken or turkey, or any other products with organic origin, such as meat, vegetables or fruit. The limits of the target weight intervals are preferably in the order of plus or minus 5 to 10 % of the corresponding target weight interval mean value.

The first target weight interval in the presently preferred embodiment of the present invention defines a first target weight interval mean value being different from a multiple of the mean value established by the weight distribution of the discrete articles and being less than n times the mean value. The integer value n is the value where n-1 times the mean value is smaller than the target weight interval.

The feeder system comprised in the apparatus for performing the method according to the first aspect of the present invention, receives the discrete articles and distributes them into respective weighing pans. The distribution may be assisted by guiding rails, vibration devices for transferring the discrete articles into respective weighing pans or other devices for selectively transferring discrete articles into respective weighing pans after the contents of the weighing pans have been emptied into a container or the like, or alternative combinations of devices.

The apparatus may be of a type such as described in the publication EP 1 515 125.

As the distribution of the weight of the discrete articles are as described above, there is a statistical probability that at some point in time a situation will arise where it is not possible to combine any of the portions comprised in the weighing pans to obtain a combined weight within the first target weight interval. Advantageously the present invention provides the possibility to obtain a combined weight within a second target weight interval.

The second target weight interval is preferably at higher weights compared to the first target weight interval.

In an advantageous embodiment of the present invention the apparatus may further comprise a collecting device defining an inlet and an outlet, the collecting device orientated so that the discrete articles discharged from the weighing pans are collected in the collecting device via the inlet, the apparatus still further comprising a switching device positioned at the outlet of the collecting device, the switching device transferring the discrete articles into a first or second type of container corresponding to a batch within the first or second target weight interval, respectively.

The collecting device collects the discrete articles discharged from the weighing pans after the combination of weighing pans has been established. The collecting device may have a conical shape so that it may collect the discrete articles from the outlets of the weighing pans, which may be positioned in e.g. a circular configuration. The conical shape of the collecting device may then transfer the discrete articles to the outlet of the collecting device, e.g. by the articles rolling on the inner sidewall of the collecting device, and out through the outlet. The discrete articles may then be transferred into appropriate containers, e.g. trays, cans etc, which then may be sealed for transportation and/or sale.

More advantageously, the apparatus may further comprise a switching device transferring the discrete articles into a first or second type of container corresponding to a batch within the first or second target weight interval, respectively. The containers may be of different sizes, types or shapes. Alternatively, the containers may be substantially identical. In either case, the containers may be individually labelled in order to differentiate between them.

In a specific embodiment of the present invention, n may be less than 20, such as less than 15, such as less than 10, preferably 3-5, such as 2-4, 4-6, such as 6-8, such as 8-10, such as 10-12, such as 12-14, such as 14-16, such as 16-18 or 18-20. Further, m may be less than 30, such as less than 25, such as less than 20, such as less than 15, such as less than 10, preferably 6-8, such as 4-6, such as 6-9, such as 9-12, such as 12-15, such as 15-20, such as 20-25, such as 25-30.

In a particular embodiment of the present invention, the plurality of weighing pans may be 15, such as 10, such as 5, such as 4.

Preferably, the portions in each of the weighing pans comprise less than 5 discrete articles, such as less than 3 discrete articles, such as less than 2 discrete articles. There is no requirement as to the weighing pans holding an equal number of articles. There may be weighing pans holding more articles than other weighing pans.

In a further preferred embodiment, the portions may be less than 2 kg, such as less than 1 kg, such as less than 800 grams, such as less than 600 grams, such as less than 450 grams, or even less. The target weight intervals may be found in the range from 20 g to 4 kg.

In one embodiment of the present invention, the weight distribution substantially corresponds to a Gaussian distribution. Other distributions may apply, e.g. normal distribution. The distribution need not be exactly normal or Gaussian distributed. It is contemplated that the greater the difference is between the mean value of the distribution of the articles and the mean value of the target weight interval divided by an integer value the more distinct the problem will be.

In a still further preferred embodiment of the present invention, the weight distribution includes an upper limit established by discarding discrete articles having a weight above a given maximum weight. Also, the weight distribution may include a lower limit established by discarding discrete articles having a weight below a given minimum weight.

The discarding of the discrete articles outside the upper or lower limits may be performed prior to the discrete articles being supplied to the feeder system, e.g. when cutting out filets of chicken or turkey breasts. Alternatively, or supplementary, the weighing pans may include a reject device for rejecting discrete articles or portions of discrete articles provided they are above a given threshold or limit.

A second aspect of the present invention relates to an apparatus for performing the method according to the first aspect of the present invention. The apparatus according to the second aspect may incorporate any features necessary to carry out the method according to the first aspect of the present invention.

In one embodiment the apparatus according to the second aspect of the present invention comprises a feeder and distribution device for receiving a plurality of articles to be weighed and batched and for distributing the plurality of articles into a multitude of weighing pans, each weighing pan adapted for receiving a portion of artices, the batch then being defined or established by a combination of one or more of the portions in the weighing pans.

The above mentioned advantages and embodiments will be described in more details with reference to the enclosed figures, in which:
Fig. 1 is a schematic side view of an apparatus for performing the method according to the present invention,
Fig. 2 is a schematic top view of the apparatus of Fig. 1,
Fig. 3 is a schematic graph illustrating the weight distribution of articles to be weighted and batched, and
Fig. 4 is a schematic graph illustrating the distribution of the target weight interval.

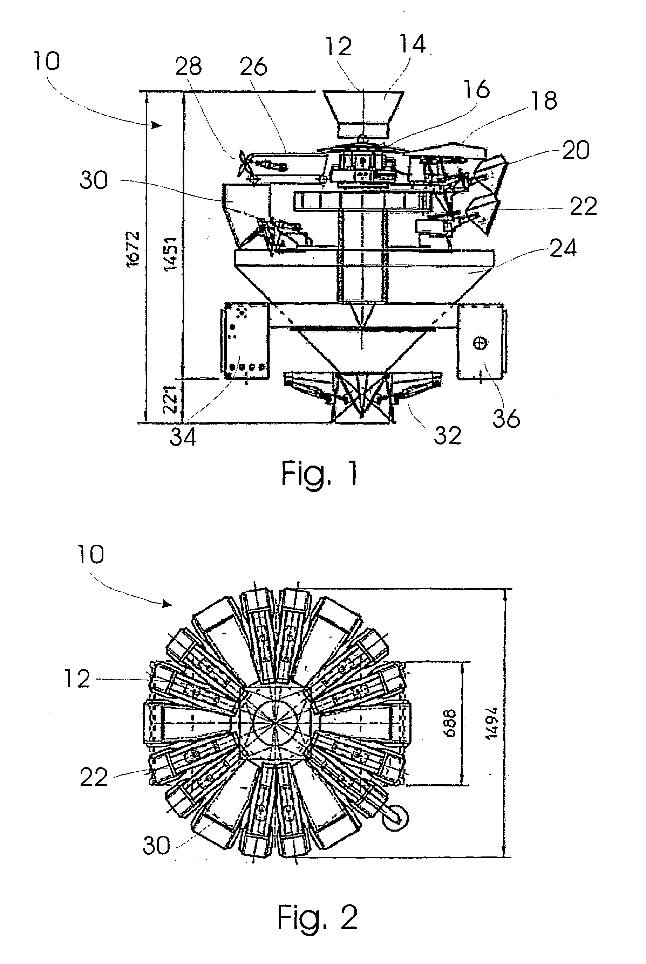

Fig. 1 is a schematic side view of an apparatus 10 for performing the method according to the teachings of the present invention.

Fig. 2 is a schematic top view of the apparatus of Fig. 1.

The apparatus 10 is used for performing the method according to the teachings of the present invention. A number of articles are to be weighed and batched into batches having a total weight within a target weight interval. The articles are fed into a number of pans, a combination of the contents of these pans is combined to obtain a target weight within a target weight interval. There may arise situations wherein it is not possible to obtain a target weight within the target weight interval. In such situations the method according to the teachings of the present invention allows establishment of a second target weight within a second target weight interval.

The apparatus 10 is built up around a central shaft 12, or a non-rotating rod, bar or pole, alternatively around or in a frame, and comprises a funnel 14. The products or articles to be weighed and batched are fed through the funnel 14 to a top cone 16 by an infeed system (not illustrated) adapted to the particular flow properties of the product. The top cone 16 oscillates and vibrates to feed or distribute the product into a feeder, such as a vibrating feeder 18, alternatively a conveyor belt feeder 26.

The vibrating feeder 18 receives the product or article from the top cone 16, and the product is then delivered into a first number of assembling pans 20 and into a second number of larger weighing pans 30. Below each of the assembling pans 20, a respective weighing pan 22 is positioned.

The apparatus 10 illustrated in Figs. 1 and 2 include large and small pans. Other embodiments may include only one single size of weighing pans.

The large weighing pans assemble a larger portion of products or articles close to the predetermined target weight, such as 75 to 80 percent of the target weight. In order to obtain a high throughput of products into the large weighing pan, products are fed from the top cone 16 into the large weighing pan 30 by a conveyor belt feeder 26 with a shutter device 28.

The vibrating feeder 18 is controlled by a central computer or processing unit (not illustrated) that receives an electrical signal from each of the individual weighing pans 30 and 22, representing the weight of the contents of the individual weighing pans 30 and 22 and generated by a weighing device included in the weighing pan. The computer controls the vibrating feeder 18 and may stop the vibrating feeder 18 when the contents of the weighing pan 22 is nearing a predetermined weight. E.g. established by one, two or more discrete articles.

In some embodiments, the assembling pans 20 may be omitted, however, the assembling pans 20 are preferably provided and positioned above the weighing pans 22, either in registration with the weighing pans 22, alternatively displaced or offset with respect to the weighing pans 22. Alternatively, the apparatus may be provided with additional assembling pans positioned above the weighing pans 30. Further alternatively, the assembling pans may be shifted from their preferred positions above the weighing pans to positions below the weighing pans.

The computer includes information regarding the weight of the contents of each weighing pan 22 in the apparatus 10 at any time as the computer has received signals from the individual weighing pan 22 and will perform calculations for determining or establishing a combination of the weights of the products in the weighing pans 30 and the weighing pans 22 in order to obtain a predetermined batch weight within the target weight interval.

The number of assembling pans 20 and weighing pans 22 and 30 is limited by the geometrical configuration of the individual assembling pans 20 and weighing pans 22 and 30 and the overall geometry of the apparatus 10; also the geometry of the individual assembling pans may differ.

The feeder or feeders may then distribute the product or products into the weighing pans and the computer may at any time calculate a combination of the contents of these weighing pans that obtains a total batch weight within the target weight interval.

The predetermined batch weight is supplied to the computer by an operator using an input device on the apparatus 10 or from an external computer connected to the computer in the apparatus 10 by a communication line such as the internet or via an intranet constituted by wireless connections or connections by cable.

In the presently preferred embodiment of the present invention the computer calculates a combination of a weighing pan 30 and one or more weighing pans 22 corresponding to a total batch weight within the predetermined target weight interval.

The establishment of the target weight interval may be subject to a number of considerations. The target weight interval may be fixed by setting a maximum weight that the target weight under no circumstances may exceed combined with a lower tolerance level. An alternative to this may be to establish a lower and a higher limit around a given specific weight. A second alternative is to specify a minimum weight. Further, a target weight may be given, and a tolerance may be given in percent, e.g. plus 3% and minus 2% of the target weight, or as absolute values, e.g. plus 50 grams and minus 20 grams.

The computer signals the weighing pans 22 and 30 to empty their contents into an assembling hopper 24 mounted below the weighing pans 22 and 30. The assembling hopper 24 may be integrated with the timing hopper 32. The top circumference of the assembling hopper 24 may have an overall geometrical configuration corresponding to the positioning of the weighing pans and assembling pans 20, so that the emptying of the weighing pans 22 and 30 does not result in any spilling of products.

Below the assembling hopper 24 a timing hopper 32 is mounted in register therewith for discharging the products into a packaging machine, packaging the products into any container such as bags, jars, etc. The timing hopper 32 receives the product or the articles discharged from the combination of weighing pans 22 and 30 obtaining a weight within a specified first or second target weight interval.

The apparatus 10 also includes boxes for electronics 34, 36, such as a computer, power cabling, etc.

Fig. 2 is a schematic top view of the apparatus 10 of Fig. 1, illustrating a circular configuration of the apparatus 10 according to the present invention. The apparatus 10 for performing the method according to the present invention may be constructed to include only one size of devices for receiving portions of articles.

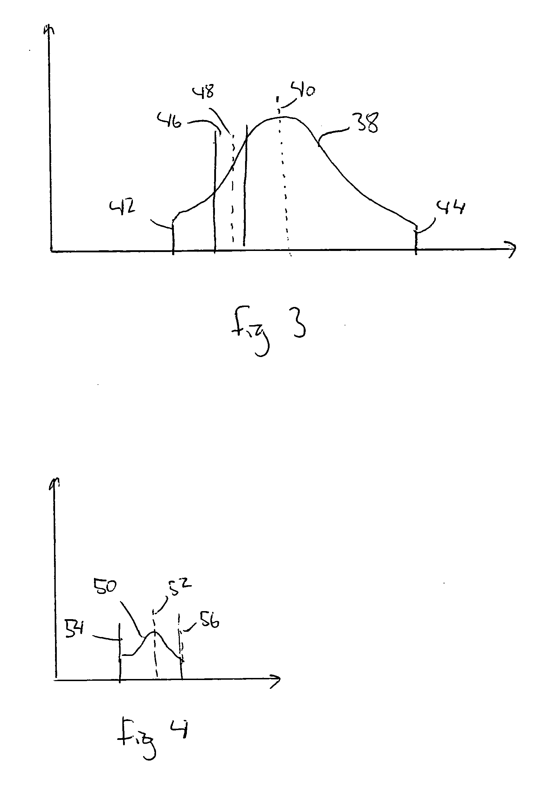

Fig. 3 is a schematic illustration of one possible weight distribution of articles to be weighed and batched.

The distribution is illustrated by the curve 38. A mean value is established at the dashed line 40. In a preferred embodiment of the present invention, the articles have been pre-sorted so that the curve 38 is limited by a low and a high threshold, illustrated by the lines 42 and 44, respectively.

Fig. 4 schematically illustrates a distribution of weights of batches obtained by the method according to the present invention.

It is contemplated that a problem may arise when the target weight interval is defined in such a way that the articles or batches most likely to be selected for the target batch have a weight within an interval 46 being lower than the mean value 40. The interval 46 defines a mean value 48. The problem is that after a period of time there is a statistical probability that all possible combinations of portions comprised in the weighing and batching receptacles provide a combined weight outside the target weight interval.

Instead of ending in a dead lock situation and having to discard or recycle all or some of the articles in the receptacles 12, weighing pans 14 or containers 16, the method according to the teachings of the present invention offers to identify a combination of portions resulting in a total weight within a second target weight interval. This is contemplated to result in a more efficient handling of the articles or products.

The distribution 50 illustrated in Fig. 4 illustrates how the weight of the batches obtained using the method according to the present invention may be distributed. There is a mean value 52 defined in the interval limited by the threshold values at 54 and 56, representing the limits of the target weight interval. Such a distribution may be defined at both target weight intervals.

The distribution of the articles, as illustrated in Fig. 3, may have other shapes or characteristics. The mean value 40 may be displaced more to either side. It is contemplated that the greater the distance or difference is between the mean value 40 of the distribution of the articles and the mean value 48, the more distinct the problem will be.

## Claims

1. A method for weighing and batching discrete articles into batches having a total weight within a first or a second target weight interval, said discrete articles having a weight distribution establishing a mean value, said first target weight interval defining a first target weight interval mean value value being different from a multiple of said mean value and being less than n times said mean value, n being a first specific number of discrete articles, said second target weight interval defining a second target weight interval mean value being different from a multiple of said mean value and being larger than m times said mean value, m being a second specific number of discrete articles, m being larger than n,
said weighing and batching being performed by an apparatus comprising:
a feeder system comprising an inlet for receiving said discrete articles and an outlet for discharging said discrete articles, and a plurality of weighing pans, each of said weighing pans having an inlet positioned so as to receive said discrete articles from said outlet of said feeder system, each of said weighing pans having an outlet for discharging said discrete articles,
said method comprising:
performing said weighing and batching by providing said discrete articles to said inlet of said feeder system, said discrete articles being distributed into portions in said plurality of weighing pans,
establishing a batch by a combination of portions in corresponding weighing pans resulting in a combined weight within said first target weight interval, and
provided no combination of portions in corresponding weighing pans result in a combined weight within said first target weight interval, establishing a batch by selecting a combination of portions in corresponding weighing pans resulting in a combined weight within said second target weight interval.

2. The method according to claim 1, wherein said apparatus further comprises a collecting device defining an inlet and an outlet, said collecting device orientated so that said discrete articles discharged from said weighing pans are collected in said collecting device via said inlet, said apparatus still further comprises a switching device positioned at said outlet of said collecting device, said switching device transferring said discrete articles into a first or second type of container corresponding to a batch within said first or said second target weight interval, respectively.

3. The method according to claims 1 or 2, wherein n is less than 20, such as less than 15, such as less than 10, preferably 5.

4. The method according to any of the claims 1-3, wherein m is less than 30, such as less than 25, such as less than 20, such as less than 15, such as less than 10, preferably 8.

5. The method according to any of the claims 1-4, wherein said plurality of weighing pans is 15, such as 10, such as 5.

6. The method according to any of the claims 1-5, wherein said portions in each of said weighing pans comprise less than 5 discrete articles, such as less than 3 discrete articles.

7. The method according to any of the claims 1-6, wherein said portions are less than 2 kg, such as less than 1 kg, such as less than 800 grams, such as less than 600 grams, such as less than 450 grams.

8. The method according to any of the claims 1-7, wherein said weight distribution substantially corresponds to a Gaussian distribution.

9. The method according to any of the claims 1-8, wherein said weight distribution includes an upper limit established by discarding discrete articles having a weight above a given maximum weight.

10. The method according to any of the claims 1-9, wherein said weight distribution includes a lower limit established by discarding discrete articles having a weight below a given minimum weight.

11. An apparatus for weighing and batching articles according to the method as defined in the claims 1-10.
